# EUROPEAN PATENT APPLICATION

(11) **EP 0 765 763 A2**
(43) Date of publication of application: **02.04.1997**
(21) Application number: 96307095.8
(22) Date of filing: 27.09.1996
(51) Int. Cl.: B41M 3/06, B41M 3/16, B41M 5/36, B41M 5/40, B41M 5/00, G03G 7/00, B41M 7/00, G09F 3/10, G09F 3/02

(54) **Three-dimensional image forming sheet**

(30) Priority: 29.09.1995 JP 253411/95
(71) Applicant: BROTHER KOGYO KABUSHIKI KAISHA, Nagoya-shi, Aichi-ken 467 (JP)
(72) Inventor: Hattori, Yasuhiro, c/o Brother Kogyo K.K., Nagoya 467 (JP)
(74) Representative: Woods, Geoffrey Corlett

(57) **Abstract**

In a three-dimensional image forming sheet comprising a base material and provided thereon a heat-expandable layer on which a relief pattern is to be formed corresponding to the form of a recorded image, the heat-expandable layer may be constituted of a thermoplastic resin having dispersed therein an antimicrobial agent and a blowing agent capable of expanding the heat-expandable layer upon heating, or may be constituted of a foamable layer containing a blowing agent capable of expanding the heat-expandable layer upon heating and, formed on the surface of the formable layer, an antimicrobial layer containing an antimicrobial agent.

In a sheet according to the above a pressure-sensitive adhesive layer may be provided on the surface of the base material on the side opposite to the heat-expandable layer, and a releasable release paper provided laminated onto the pressure-sensitive adhesive layer.

## Description

### BACKGROUND OF THE INVENTION

### 1. Field of the Invention

This invention relates to a three-dimensional image forming sheet.

### 2. Description of the Related Art

With regard to conventional three-dimensional image forming sheets of this type, Japanese Patent Publication No. 59-35359, for example, discloses a method in which a three-dimensional image formed sheet is prepared by forming a desired image on the surface of a heat-expandable sheet by the use of a material having a higher ability to absorb light than the heat-expandable sheet, and irradiating the surface with light to heat and raise the image-formed areas by utilizing a difference in absorption of light.

Japanese Patent Application Laid-open No. 61-72589 also discloses a technique in which an image formed of a material having a high ability to absorb light is formed on a foamable recording material, and its surface is irradiated with light so that a relief pattern corresponding to the image thus recorded is formed by utilizing an ability to absorb light. Use of such methods enables formation of stereoscopic maps and besides display articles for visually handicapped persons.

However, when such three-dimensional images are perceived by humans, the three-dimensional images must be touched usually with hands or fingers. Hence, dust may adhere to the surfaces of the three-dimensional images, or bacteria, fungi or the like tend to propagate themselves on the surfaces, resulting in not only a dirty appearance but also an unsanitary state. Such problems have been serious especially in the case of display articles in public facilities utilized by visually handicapped persons.

It has been also desired if sheets on which three-dimensional images have been formed can be readily stuck to any desired places.

### SUMMARY OF THE INVENTION

The present invention was made in order to solve such problems. Accordingly, an object of the present invention is to provide a three-dimensional image forming sheet which can obtain a sanitary three-dimensional image sheet usable as a display article that may be touched by unspecified recipients.

A second object of the present invention is to make it possible for the image sheet obtained using such a sanitary three-dimensional image forming sheet to be readily stuck to any desired places.

The above objects can be achieved by the following three-dimensional image forming sheet of the present invention.

The present invention provides a three-dimensional image forming sheet comprising a base material and provided thereon a heat-expandable layer on which a relief pattern corresponding to the form of a recorded image is to be formed, wherein the heat-expandable layer has an antimicrobial property. Here, a pressure-sensitive adhesive layer may be formed on the surface of the base material on the side opposite to the heat-expandable layer, and a release paper may be further laminated onto the pressure-sensitive adhesive layer in a releasable state. This enables achievement of the second object of the present invention.

### BRIEF DESCRIPTION OF THE DRAWINGS

Fig. 1 is a cross section of a three-dimensional image forming sheet according to a first embodiment of the present invention.

Fig. 2 is a cross section of a three-dimensional image forming sheet according to a second embodiment of the present invention.

Fig. 3 is a cross section of a three-dimensional image forming sheet according to a third embodiment of the present invention.

Fig. 4 is a cross section of a three-dimensional image forming sheet according to a fourth embodiment of the present invention.

Fig. 5 illustrates how to form three-dimensional images by the use of the three-dimensional image forming sheet of the invention.

### DESCRIPTION OF THE PREFERRED EMBODIMENTS

The three-dimensional image forming sheet of the present invention is characterized by a heat-expandable layer having an antimicrobial property such as an antibacterial property, antifungous property or the like. This enables prevention of propagation of microbes to always keep the resulting three-dimensional image sheet (image-formed sheet) sanitary and clean.

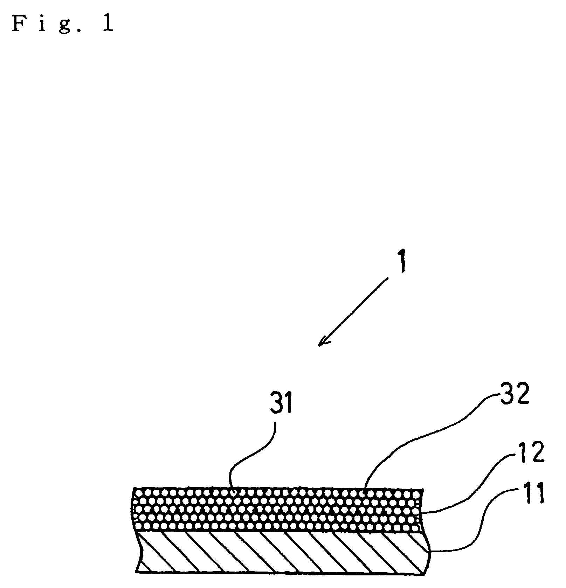

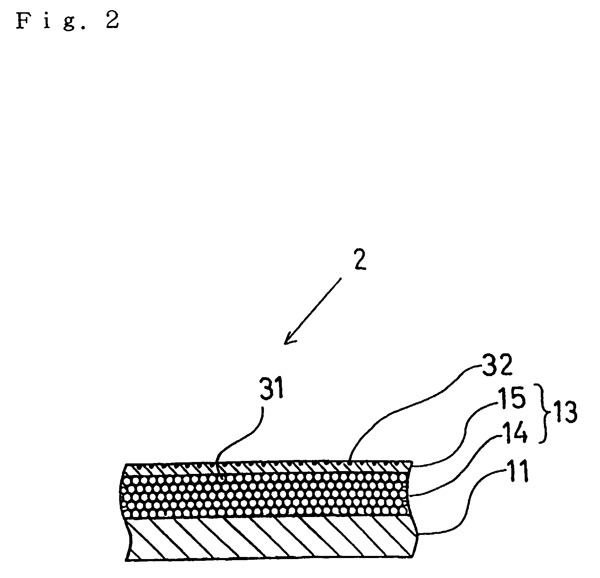

Figs. 1 and 2 illustrate three-dimensional image forming sheets according to the first and second embodiments, respectively, of the present invention.

A three-dimensional image forming sheet 1 according to the first embodiment as shown in Fig. 1 comprises a base material 11 and a heat-expandable layer 12 formed thereon. In this embodiment, in order to impart an antimicrobial property to the heat-expandable layer 12, the heat-expandable layer 12 is constituted of a thermoplastic resin and dispersed therein a blowing agent 31 capable of expanding the layer 12 upon heating and an antimicrobial agent 32.

The base material 11 may preferably be smooth, have a water resistance and have a tensile strength, and besides have a rigidity high enough not to be raised to the opposite side of the heat-expandable layer 12 when the blowing agent 31 is caused to act. As materials having these properties, it is preferable to use, e.g., paper, synthetic paper of polypropylene or the like, or various plastic films of polyethylene terephthalate (PET), polybutylene terephthalate (PBT) or the like. In particular, the use of PET film having been foamed and having inside a great number of cells can make images three-dimensional at a low energy because of a high heat insulation effect of the material.

The base material 11 may have a thickness of, e.g., 10 µm to 100 µm, and there are no particular limitations. It may preferably have a thickness larger than the heat-expandable layer 12. If the former is thinner than the latter, the three-dimensional image forming sheet 1 may become wavy or wrinkled.

The blowing agent 31 includes compounds capable of generating non-toxic gases upon thermal decomposition as exemplified by hydrogencarbonates such as sodium hydrogencarbonate, various peroxides, azo compounds such as diazoaminobenzene, aluminum para-dicarbonate and azobisisobutyronitrile, which are preferably usable.

The blowing agent 31 constitutes the material capable of expanding the heat-expandable layer 12 upon heating in the present invention.

Heat-expandable capsules prepared by encapsulating a low-boiling point gasifiable substance such as propane, butane or pentane into shells formed of polystyrene, polyvinyl chloride, polyvinylidene chloride, polyvinyl acetate, polyacrylate, polyacrylonitrile, polybutadiene or a copolymer of some of these, to form microcapsules of 5 to 20 µm diameter may also be used as the blowing agent 31.

As the antimicrobial agent 32, it is possible to use an antimicrobial metal such as silver, copper or zinc, or an inorganic or organic chemical material containing the antimicrobial metal. It more specifically includes Antimicrobial ZEOMIC (trade name; available from Shinagawa Fuel Co., Ltd.). The antimicrobial mechanism of these substances has not been made completely clear, and it is presumed that the enzyme inhibition of fundamental metabolic systems such as the respiratory system and electron transport system of microbial cells causes the presentation of an antimicrobial property. Stated specifically, the antimicrobial agent has an antimicrobial effect to prevent and inhibit development and propagation of usual bacteria such as colon bacterium (Escherichia coli) and Pseudomonas aeruginosa and fungi such as black mold (Aspergillus niger).

The blowing agent 31 and antimicrobial agent 32 are dispersed in a solution or emulsion of the resin used as a binder, by means of a known dispersion machine such as a roll mill and a sand mill. The resulting dispersion is coated on the base material 11 by means of a known coater, followed by drying to form the heat-expandable layer 12.

As the resin used as a binder, thermoplastic resins such as vinyl acetate polymers and acrylic polymers may preferably be used so that the resin can be thermally softened to form a stable heat-expandable layer 12 at the same time when the blowing agent 31 undergoes thermal decomposition upon heating to generate gas or when the heat-expandable capsules undergo thermal expansion.

The heat-expandable layer 12 is formed in a thickness of from 20 µm to 100 µm.

The three-dimensional image forming sheet constituted as described above can prevent propagation of microbes on account of the antimicrobial agent 32 dispersed in the heat-expandable layer 12, and hence a three-dimensional image sheet obtained using this image forming sheet can be always kept sanitary and clean.

A three-dimensional image forming sheet 2 according to the second embodiment will be described below with reference to Fig. 2. This sheet 2 comprises a base material 11 and a heat-expandable layer 13 formed thereon. In this embodiment, in order to impart antimicrobial properties to the heat-expandable layer 13, the heat-expandable layer 13 is constituted of a foamable layer 14 containing a blowing agent 31 capable of expanding the layer 13 upon heating and an antimicrobial layer 15 containing an antimicrobial agent 32, formed on the surface of the foamable layer 14.

When the three-dimensional image forming sheet is constituted in this way, the antimicrobial agent 32 can be concentrated to the sheet surface to be touched with hands or fingers, and hence the propagation of microbes can be prevented to substantially the same extent and an image sheet obtained using this three-dimensional image forming sheet can be always kept sanitary and clean, even though the antimicrobial agent is used in a smaller quantity than in the case of the three-dimensional image forming sheet according to the first embodiment of the present invention.

The foamable layer 14 is constituted of a thermoplastic resin and a blowing agent 31 dispersed therein, and is formed with the same composition as the heat-expandable layer 12 described with reference to Fig. 1, except that it does not contain the antimicrobial agent 32.

The antimicrobial layer 15 can be formed by coating on the surface of the foamable layer 14 of the three-dimensional image forming sheet 2, a coating fluid obtained by dispersing the antimicrobial agent 32 in a binder solution.

The antimicrobial layer 15 may preferably have a thickness in the range of from about 3 µm to about 20 µm. If it has a thickness smaller than 3 µm, there is a high possibility of causing cracks in the antimicrobial layer 15 as a result of the expansion of the foamable layer 14, or causing a break of the antimicrobial layer 15 because of the friction by touch with hands or fingers. If it has a thickness larger than 20 µm, there is a high possibility of inhibiting the expansion of the foamable layer 14.

The antimicrobial agent 32 is dispersed in the binder solution by means of a known mixer such as a roll mill and a sand mill.

The coating fluid prepared by dispersing the antimicrobial agent in the binder solution may be of any type including an organic solvent type, an aqueous type and an emulsion type. It is suitable to use a material having good anti-blocking properties so as not to cause blocking which may occur when the antimicrobial layer 15 formed adheres to other sheet or the like.

Solvents used in the organic solvent type coating fluid include aliphatic hydrocarbons such as hexane and heptane, aromatic compounds such as toluene and xylene, ketones such as acetone and methyl ethyl ketone, and acetates such as ethyl acetate and isobutyl acetate.

If, however, organic solvents having a strong dissolving power are selected, the solvent may attack the binder resin used on the side of the foamable layer 14, to roughen the coating surface. In the case when the heat-expandable capsules are used in the blowing agent 31 and if a solvent such as alcohol is used, the solvent may attack the shells to cause a break of capsules. Hence, in the organic solvent type coating fluid, aliphatic hydrocarbons such as hexane and heptane are particularly preferred. In this case, the coating fluid is a solution or dispersion prepared by dissolving or dispersing in the solvent any one or more of phenol resin, an acrylic resin and a cellulose type resin.

As components of the aqueous type coating fluid, water-soluble polymers such as polyvinyl alcohol, methyl cellulose, hydroxypropyl cellulose and polyvinyl pyrrolidone may be used.

As the emulsion type coating fluid, emulsions of acrylic resin, polyurethane, polyester, polyacrylic urethane copolymers or the like may be used.

The aqueous type and emulsion type coating fluids by no means dissolve the foamable layer 14. On the other hand, the solvent type coating fluid is advantageous in view of drying performance. Drying temperature may preferably be set at 80°C or below so that the foamable layer 14 is not expanded by accident upon heating for the drying.

Three-dimensional image forming sheets according to the third and fourth embodiments of the present invention will be described below, which are embodiments in which the three-dimensional image forming sheets 1 and 2 of the present invention as shown in Figs. 1 and 2, respectively, are so designed that three-dimensional image sheets obtained using the image forming sheets can be simply attached to any desired places.

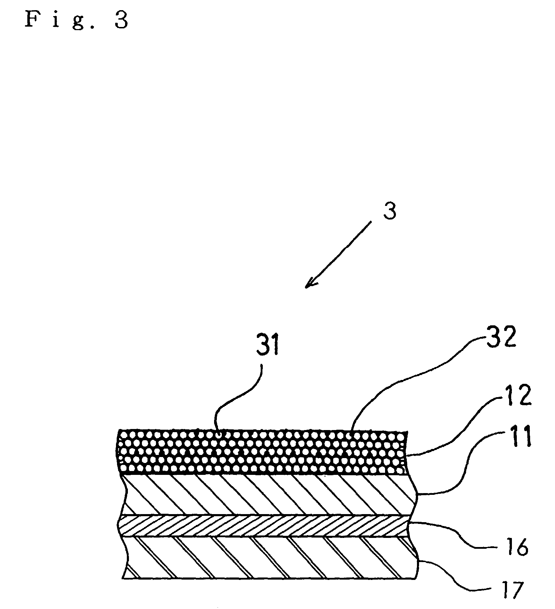

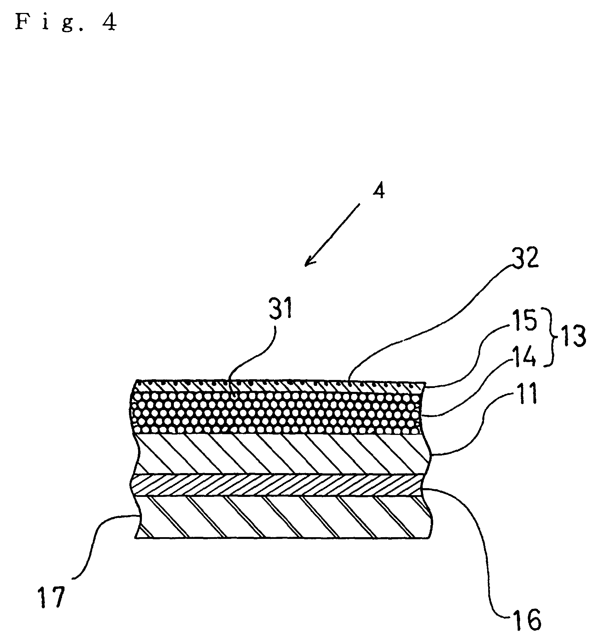

A three-dimensional image forming sheet 3 according to the third embodiment as shown in Fig. 3 is constructed in such a manner that a pressure-sensitive adhesive layer 16 having the property of self-adhesion upon application of a pressure is formed on the base material surface on the side opposite to the heat-expandable layer 12 on the base material 11 of the three-dimensional image forming sheet 1 shown in Fig. 1, and a release paper 17 is further laminated to the pressure-sensitive adhesive layer 16 in a releasable state. A three-dimensional image forming sheet 4 according to the fourth embodiment as shown in Fig. 4 is constructed in such a manner that a pressure-sensitive adhesive layer 16 having the property of self-adhesion upon application of a pressure is formed on the base material surface on the side opposite to the heat-expandable layer 13 on the base material 11 of the three-dimensional image forming sheet 2 shown in Fig. 2, and a release paper 17 is further laminated onto the pressure-sensitive adhesive layer 16 in a releasable sate.

The pressure-sensitive adhesive layer 16 can be formed by coating on the base material 11 a coating fluid prepared by dissolving a wax type, acrylic type, silicone type or rubber type pressure-sensitive adhesive in a solvent such as toluene or methyl ethyl ketone, or a coating fluid prepared in the form of an emulsion, which is coated by means of a known coater, followed by drying.

Then, after the pressure-sensitive adhesive layer 16 has been formed, the release paper 17 is laminated to the pressure-sensitive adhesive layer 16. The release paper 17 comprises a plastic film base material such as polypropylene film or PET film and formed thereon a release layer of silicone type, polyethylene, PVA or alkyd resin. In particular, the silicone type release layer may preferably be used.

A three-dimensional image sheet obtained using the three-dimensional image forming sheet 3 or 4 constituted as described above can be stuck to any desired places after the release paper is peeled with ease.

The three-dimensional image forming sheets 1 to 4 obtained in the manner as described above may be subjected to smoothing to make the surface of the heat-expandable layer 12 or antimicrobial layer 15 smooth. Those subjected to smoothing makes it easy to form images or characters, so that three-dimensional images formed by heat expansion can be clear. The smoothing is specifically exemplified by calendering, which is commonly used in the production process for art paper or the like.

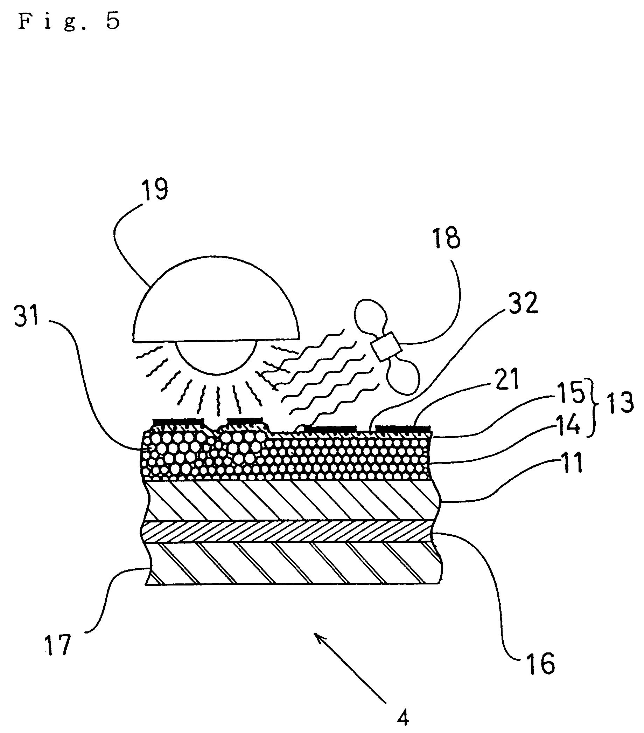

How to produce a three-dimensional image sheet by the use of the three-dimensional image forming sheet 4 constituted as described above will be described below with reference to Fig. 5; three-dimensional images used as braille or the like being formed on the three-dimensional image sheet.

First, as shown in Fig. 5, images 21 such as figures and characters are formed on the antimicrobial layer 15 of the three-dimensional image forming sheet 4 by an image forming means (not shown). As the image forming means, any known techniques may be used, including thermal transfer systems making use of an ink ribbon and a thermal head, ink-jet recording systems that jet out ink, and electrophotographic systems making use of a toner. Here, the ink or toner that forms the images 21 must contain at least a material that can readily absorb light. Stated specifically, carbon black may be used to form black images. Carbon black has the nature to absorb light ranging from visible light to near infrared light and convert light energy to heat.

Meanwhile, when images other than black images are necessary, known dyes or pigments as exemplified by red, blue and yellow ones may be used in inks. Since, however, such dyes or pigments have a small light absorption in the infrared region, light energy can not be well converted to heat. Accordingly, it is necessary to appropriately mix a compound oxide mainly composed of an oxide of tin, antimony or indium, to thereby increase light absorption in the infrared region.

The three-dimensional image forming sheet 4 on which images have been thus formed is irradiated with light to form three-dimensional images. As shown in Fig. 5, the three-dimensional image forming sheet 4 on which images 21 having the ability to absorb light have been formed is irradiated with light using a lamp 19. As the lamp, any of lamps that can radiate light ranging from visible to infrared may be used, as exemplified by a tungsten lamp, a halogen lamp and a xenon lamp.

Once the images 21 having the ability to absorb light, formed on the antimicrobial layer 15, are irradiated with light using this lamp 19, the light is absorbed in the images 21 and converted to heat energy. Hence, the heat-expandable layer 13 lying beneath the images 21 is heated. Thereupon, the blowing agent 31 of the foamable layer 14 is caused to act by thermal decomposition at its heated portions, and hence the foamable layer 14 is expanded to raise the surface of the antimicrobial layer 15 at that portions. In the case when heat-expandable capsules are used as the blowing agent 31, the foamable layer 14 is expanded as a result of the expansion of capsules to raise the surface of the antimicrobial layer 15 at the heated portions.

In this way, a three-dimensional image sheet is obtained on which three-dimensional images have been formed at the portions corresponding to the images 21.

At this stage, at the same time when the surface is irradiated with light using the lamp 19, air may be blown with a fun 18 around the surface of the antimicrobial layer 15, whereby the elevation of environmental temperature around the antimicrobial layer 15 can be prevented. This can make greater the temperature difference between the portions where temperature rises upon absorption of light and the portions where temperature does not rise because of reflection of light. Hence, the heat-expandable layer 13 can be raised only at its portions intended to be raised, so that the three-dimensional images can be formed in a higher resolution. Through the above process, a three-dimensional image sheet is obtained on which only the desired portions have been raised.

The three-dimensional image sheet thus obtained can be used in toys or the like, and besides its image data may be made correspondent to braille points so as to be usable as a braille sheet. This braille sheet can be widely used as display of public matter, e.g., guide plates at stations and bus stops, and floor number buttons of elevators. Such display of public matter is made for a long period of at least a month or longer and is repeatedly touched by unspecified recipients, and hence the antimicrobial action attributable to the antimicrobial layer 15 is especially effective.

Three-dimensional images can be similarly formed also when the three-dimensional image forming sheet 4 is replaced with the three-dimensional image forming sheets 1 to 3 shown in Figs. 1 to 3.

As is clear from the foregoing description, in the three-dimensional image forming sheet, the heat-expandable layer on which a relief pattern corresponding to the form of images, characters or the like has antimicrobial properties. Hence, the propagation of microbes can be prevented and the three-dimensional image sheet obtained can be always kept sanitary and clean.

In the embodiment where the three-dimensional image forming sheet is provided with the pressure-sensitive adhesive layer formed on the side opposite to the heat-expandable layer and the release paper is laminated to the pressure-sensitive adhesive layer in a releasable state, the three-dimensional image sheet obtained can be stuck to any desired places after the release paper is peeled with ease.

## Claims

1. A three-dimensional image forming sheet comprising a base material and, provided thereon, an antimicrobial heat-expandable layer on which a relief pattern is to be formed corresponding to the form of a recorded image.

2. A sheet according to claim 1, wherein said heat-expandable layer comprises a thermoplastic resin and, dispersed therein, an antimicrobial agent and a blowing agent capable of expanding said heat-expandable layer upon heating.

3. A sheet according to claim 2, wherein said thermoplastic resin is a vinyl acetate polymer or an acrylic polymer.

4. A sheet according to claim 1, wherein said heat-expandable layer comprises a foamable layer containing a blowing agent capable of expanding said heat-expandable layer upon heating and, provided on the surface of the foamable layer, an antimicrobial layer containing an antimicrobial agent.

5. A sheet according to claim 4, wherein said antimicrobial layer has a thickness of from 3 µm to 20 µm.

6. A sheet according to claim 4 or 5, wherein said antimicrobial layer is a layer obtainable by coating on the foamable layer a composition prepared by mixing at least one resin selected from a phenol resin, an acrylic resin and a cellulose resin and the antimicrobial agent in an aliphatic hydrocarbon solvent.

7. A sheet according to claim 4 or 5, wherein said antimicrobial layer is a layer obtainable by coating on the foamable layer a composition prepared by mixing a water-soluble polymer and the antimicrobial agent in water.

8. A sheet according to claim 7, wherein said water-soluble polymer is selected from polyvinyl alcohol, methyl cellulose, hydroxypropyl cellulose and polyvinyl pyrrolidone.

9. A sheet according to claim 4 or 5, wherein said antimicrobial layer is a layer obtainable by coating on the foamable layer a composition prepared by mixing the antimicrobial agent in a polymer emulsion.

10. A sheet according to claim 9, wherein said polymer emulsion is selected from an acrylic resin emulsion, a polyurethane emulsion, a polyester emulsion and a polyacrylic urethane copolymer emulsion.

11. A sheet according to any one of the preceding claims, wherein said heat-expandable layer has a thickness of from 20 µm to 100 µm.

12. A sheet according to any one of the preceding claims, wherein said heat-expandable layer has a smooth surface.

13. A sheet according to any one of the preceding claims, wherein said base material is a polyethylene terephthalate film having interior cells.

14. A sheet according to any one of the preceding claims, wherein a pressure-sensitive adhesive layer is provided on the surface of the base material on the side opposite to the heat-expandable layer, and a releasable release paper is provided laminated onto the pressure-sensitive adhesive layer.

15. A sheet according to claim 14, wherein a release layer is formed on the release paper on the side of the pressure-sensitive adhesive layer.
